(19) Europäisches Patentamt
European Patent Office
Office européen des brevets

(11) EP 0 705 289 B1

(12) FASCICULE DE BREVET EUROPEEN

(45) Date de publication et mention de la délivrance du brevet: **08.08.2001 Bulletin 2001/32**

(21) Numéro de dépôt: **94920512.4**

(22) Date de dépôt: **24.06.1994**

(51) Int Cl.7: **C08G 18/38**, C08G 18/67

(86) Numéro de dépôt international: **PCT/FR94/00767**

(87) Numéro de publication internationale: **WO 95/00571 (05.01.1995 Gazette 1995/02)**

(54) **POLYMERE RETICULABLE, UTILISABLE NOTAMMENT EN OPTIQUE ET EN OPTIQUE NON LINEAIRE, MATERIAUX OU DISPOSITIFS EN FAISANT APPLICATION ET PROCEDE D'OBTENTION DUDIT POLYMERE**

VERNETZBARES POLYMER, INSBESONDERE VERWENDBAR IN DER OPTIK UND IN DER NICHTLINEAREN OPTIK, DARAUS HERGESTELLTE MATERIALIEN UND GEGENSTÄNDE UND VERFAHREN ZUR HERSTELLUNG DIESES POLYMERS

CROSS-LINKABLE POLYMER, PARTICULARLY FOR OPTICAL AND NON-LINEAR OPTICAL USE, MATERIALS OR DEVICES USING SAME, AND METHOD FOR PREPARING SAID POLYMER

(84) Etats contractants désignés:
**AT BE CH DE DK ES FR GB GR IE IT LI LU MC NL PT SE**

(30) Priorité: **25.06.1993 FR 9308027**

(43) Date de publication de la demande: **10.04.1996 Bulletin 1996/15**

(73) Titulaire: **FLAMEL TECHNOLOGIES, Société Anonyme**
**69693 Venissieux Cédex (FR)**

(72) Inventeurs:
- **TAPOLSKY, Gilles, Hugues**
  **F-69230 St. Genis-Laval (FR)**
- **CHAN, You, Ping**
  **F-69008 Lyon (FR)**
- **MEYRUEIX, Rémi**
  **F-69009 Lyon (FR)**
- **LECOMTE, Jean-Pierre**
  **F-69007 Lyon (FR)**
- **DICKENS, Michael**
  **F-69005 Lyon (FR)**

(74) Mandataire: **Fleurance, Raphael et al**
**Cabinet Plasseraud**
**27, rue de la Villette**
**69003 Lyon (FR)**

(56) Documents cités:
**EP-A- 0 401 063**
**EP-A- 0 422 500**
**EP-A- 0 445 864**
**EP-A- 0 524 865**
**US-A- 4 985 528**

- **JOURNAL OF POLYMER SCIENCE PART:A POLYMER CHEMISTRY, vol.31, no.6, Mai 1993, NEW YORK, US pages 1365 - 1375 KITIPICHAI ET AL 'IN-SITU POLING AND SYNTHESIS OF NLO CHROMOPHORE-BEARING POLYURETHANES FOR SECOND HARMONIC GENERATION'**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 705 289 B1

Printed by Jouve, 75001 PARIS (FR)

## Description

### DOMAINE TECHNIQUE :

Le domaine de la présente invention est celui des matériaux susceptibles d'être utilisés en optique et en optique non linéaire (ONL).

La présente invention concerne de nouveaux composés organiques de nature polymère ou copolymère, présentant, entre autres, une activité en optique et/ou une activité en optique non linéaire.

Plus précisément, l'invention se rapporte à des oligomères, cooligomères, polymères, copolymères, ci-après indifféremment désignés par la dénomination commune polymères et comprenant des composés chromophores.

### TECHNIQUE ANTERIEURE:

Les polymères optiques concernés par l'invention ont pour autre caractéristique une aptitude à réticuler pour donner des matériaux plus ou moins rigides et/ou insolubles et qui peuvent éventuellement être mis, par exemple, sous forme de film pour réaliser des dispositifs optiques.

Dans ces applications optiques et optoélectroniques, on exploite le fait que ces macromolécules se comportent comme des matériaux optiquement linéaires et/ou comme des matériaux optiquement non linéaires.

A l'échelle macroscopique, le comportement optiquement linéaire ou optiquement non linéaire de ces matériaux est déterminé par les susceptibilités.

Celles-ci sont directement reliées à la polarisation du matériau induite par un champ électromagnétique E et régit par la relation fondamentale suivante :

$$P = P_0 + \chi^1 E + \chi^2 EE + \chi^3 EEE + ...$$

dans laquelle :

- $P$ et $P_0$ : représentent la polarisation, respectivement, en présence et en absence de champ électromagnétique,
- E: représente le champ électromagnétique,
- $\chi^1$: représente la susceptibilité linéaire,
- $\chi^2$ et $\chi^3$ : représentent les susceptibilités non linéaires du matériau.

Le coefficient $\chi^1$ reflète le comportement optique linéaire du matériau.

Les filtres, les polariseurs, les guides d'ondes sont des exemples de composants utilisant des polymères pour leur comportement optique linéaire.

Les coefficients $\chi^2$ et $\chi^3$ reflètent, respectivement, l'activité en optique non linéaire d'un matériau non linéaire de premier ordre et d'un matériau non linéaire de deuxième ordre.

Les matériaux actifs en optique non linéaire sont, généralement, mis en oeuvre dans des composants actifs du type modulateur, coupleur directionnel, bistables optique, film photoconducteur, etc.

L'activité en optique non linéaire de ces matériaux polymères trouve son origine dans les composés hyperpolarisables (ou chromophores) qu'ils contiennent.

Par chromophore, il faut comprendre tout motif structurel dont l'interaction avec le champ électromagnétique de la lumière génère l'effet optique recherché.

Cet effet peut avoir lieu à des longueurs d'onde résonnantes ou non résonnantes.

L'activité en optique non linéaire de ces chromophores est donnée par leur hyperpolarisabilité.

Cette dernière est directement reliée au moment dipolaire moléculaire par la relation fondamentale suivante :

$$\mu = \mu_0 + \alpha F + \beta FF + \gamma FFF + ...$$

dans laquelle :

- $\mu$ et $\mu_0$ : représentent les moments dipolaires, respectivement en présence et en absence de champ électromagnétique,
- F: représente le champ électromagnétique local,
- $\alpha$ et $\beta$: représentent les coefficients de polarisabilité et d'hyperpolarisabilité.

Le coefficient $\alpha$ est le coefficient de polarisabilité de la molécule chromophore et reflète son activité en optique linéaire.

Les coefficients $\beta$ et $\gamma$ représentent les coefficients d'hyperpolarisabilité, respectivement du premier et deuxième ordre.

Afin de mieux comprendre les spécifications imposées aux polymères optiques et optiques non linaires (ONL), il convient de rappeler que les guides d'onde linéaires ou non linéaires sont constitués de plusieurs couches de polymères déposées successivement les unes sur les autres sur un substrat, par exemple par la technique de "spin coating".

La couche centrale, d'indice le plus élevé, constitue le matériau guidant. Le confinement latéral de la lumière, dans cette couche d'indice élevé, est réalisé en y traçant un guide par des techniques connues de l'homme de l'art comme, par exemple, le moulage, l'érosion ionique ou le photoblanchiment. Cette dernière technique, qui exige que la couche centrale guidante ait un indice de réfraction photosensible, est préférée de l'homme de l'art.

Tout cela suppose que les polymères employés aient une absorption et des indices ajustables et contrôlés, de préférence par photoblanchiement, et stables dans le temps et à la température.

Pour de plus amples détails et explications sur l'utilisation des polymères pour la fabrication de guides d'ondes optiques et optoélectroniques, on consultera l'ouvrage "Polymers for Lightwave and Integrated Optics", L. A. HORNACK, M. DECKKER ED, N. Y. (1992), ou encore l'article de C. c. TENG Appl. Phys. Lett., 60 (13), 1538, (1992).

Par ailleurs, on sait que, pour être actif en ONL, ce qui équivaut à présenter une susceptibilité non linéaire du premier ordre non nulle, voire élevée, et donc pouvoir être utilisés dans des composants optoélectroniques du type modulateur électro-optique, les chromophores hyperpolarisables doivent être orientés non centrosymétriquement dans la matrice.

Cela est généralement réalisé par polarisation du film sous un champ électrique élevé, à une température voisine de la température de transition vitreuse (Tg). L'orientation ainsi induite est ensuite gelée par refroidissement sous champ.

Le film orienté obtenu est hors d'état d'équilibre et tend à se désorienter, ce qui limite la durée de vie du composant optoélectronique.

Comme le film peut s'échauffer lors de son stockage ou au cours des étapes de soudure ou de dépôt des couches métalliques, la stabilité thermique de l'orientation des chromophores est une caractéristique cruciale du polymère.

Pour plus de détails sur ces questions théoriques, on se référera à l'ouvrage de D. S. CHEMLA et J. ZYSS : "Non linear optical properties of organic molecules and crystals", Academic Press, 1987 ou l'ouvrage de L. A. HORNACK précité.

Ainsi, les polymères optiques et optiquement non linéaires doivent satisfaire à quatre types d'exigences (cahier des charges), afin d'être utilisables dans des applications en optique linéaire et en optoélectronique.

**1**° - Les polymères doivent posséder les propriétés fonctionnelles suivantes :

- une absorption et des indices de réfraction parfaitement contrôlés et ajustables, de préférence par photoblanchiement UV (guides-ondes),
- des susceptibilités non linéaires du premier et second ordre importantes.

**2**° - Ces propriétés fonctionnelles doivent pouvoir être ajustées à des applications particulières variées, sans modification radicale et lourde de la synthèse.

**3**° - Ces propriétés fonctionnelles doivent être constantes dans le temps et stables vis-à-vis de la température, afin d'assurer une durée de vie suffisante au matériau. Un polymère optiquement non linéaire doit, avantageusement, présenter, entre autres, une bonne stabilité de l'orientation des dipoles aux températures les plus élevées rencontrées lors du procédé de fabrication du composant optoélectronique.

**4**° - Les polymères doivent présenter des propriétés de mise en oeuvre permettant de fabriquer aisément les composants optoélectroniques par les procédés standard connus de l'homme de l'art.

Ces propriétés de mise en oeuvre sont notamment :

- insolubilité après dépôt en couche mince,
- bonne adhésivité du polymère d'une couche avec les autres couches adjacentes,
- polarisation aisée et reproductible selon procédé simple et fiable.

De nombreuses structures macromoléculaires ont été proposées pour tenter, en vain, de répondre cumulativement à ces exigences **1 à 4**.

Dans le domaine des polymères utilisés en optique, on peut citer, par exemple, le polycarbonate décrit dans

l'article de T. KUVOKAWA et al. (Applied Optics, 1980, 19, 3124). Bien que transparents, ces polymères sont peu appropriés à l'interconnexion de composants électroniques, car solubles et insuffisamment thermostables.

Les polyimides, du type de ceux commercialisés sous la dénomination PI 25 66 par la Société DUPONT DE NEMOURS et sous la dénomination "PROBIMIDE 400" par la Société CIBA-GEIGY, décrits respectivement dans les publications de R. REUTER et al. (APPLIED OPTICS - 1988, 27, 4565) et de K.K. CHAKRAVORTY et al. (SPIE, vol. 1389, Int. Conf. Adv. in interconnection and packaging - 1990, 559), sont certes insolubles après cuisson, mais sont caractérisés par l'indice de réfraction qui n'est pas ajustable finement. Par ailleurs, ces polymères se prêtent mal au photoblanchiment.

Dans le domaine des polymères optiquement non linéaires, on peut citer, par exemple, l'article de c. YE et al. "Macromolecules" 20, 22-23, 1987 et le brevet **US 4 750 730** qui décrit une famille de polymères fonctionnalisés ONL par greffage covalent des molécules hyperpolarisables.

La demande de brevet **EP 0 363 237** décrit une famille de polyuréthanes fonctionnalisés par greffage covalent de groupements hyperpolarisables directement à la chaîne principale. Ces polymères présentent des propriétés fonctionnelles à peu près correctes. Les matrices utilisées ont une bonne transparence dans le proche infrarouge. Cependant, la stabilité dans le temps de ces propriétés fonctionnelles est insuffisante car la transition vitreuse de ces matériaux est de 130 et 145°C, respectivement.

La demande de brevet **FR 2 630 744** divulgue des copolymères polyacrylates dans lesquels les comonomères sont porteurs chacun d'une chaîne latérale pendante. Pour l'un des comonomères, cette chaîne latérale pendante possède une fonctionnalité chromophore, tandis que, pour l'autre comonomère, la fonctionnalité de la chaîne latérale pendante est réticulante. La coexistence de ces deux fonctionnalités en chaînes latérales est pénalisante pour l'expression de chacune d'elles (encombrement). De plus, la température de transition vitreuse de ces copolymères est trop faible. Enfin, lesdits copolymères ne satisfont pas, notamment, à l'exigence n° **4** du cahier des charges présenté ci-avant. En effet, la moindre modification de nature de comonomères chromophores et/ou réticulants entraîne un changement des réactivités et donc un bouleversement de la synthèse.

La demande de brevet **WO 91/03 001** et la demande de brevet **EP 0 478 480** proposent des structures thermoréticulées polyimides et bismaléimides, respectivement, dont l'insolubilité et la stabilité des propriétés fonctionnelles semblent satisfaisantes.

Néanmoins, ces polymères sont de mise en oeuvre particulièrement délicate. En effet, leur polarisation doit être, préférentiellement, effectuée à une température voisine de leur température de transition vitreuse. Or, cette dernière a l'inconvénient de croître avec la température de polarisation imposée. Il s'ensuit qu'il est nécessaire de mettre en oeuvre un protocole complexe de polarisation, dans lequel on fait varier la température et le champ de polarisation au cours du temps.

Outre cet inconvénient de mise en oeuvre, ces polymères réticulés peuvent se fissurer. Or, on sait que, pour certaines applications, il est utile que la couche de polymère soit relativement épaisse (de 5 à 7 microns), afin de faciliter la connexion du composant avec une fibre monomode en silice. On constate, parfois, que pour de telles épaisseurs, les polymères réticulés des brevets ci-dessus se fissurent lors de leur refroidissement.

Il existe donc une carence, dans le domaine technique considéré, en un polymère optique, d'une part, doué de propriétés en optique et/ou en optique non linéaires d'un niveau satisfaisant et stables et, d'autre part, transformable en réticulat de bonne tenue mécanique, adhésif et insoluble après mise en forme.

Dans cet environnement technique, l'un des objectifs essentiels de la présente invention est de proposer de nouveaux polymères optiques susceptibles d'être utilisés comme matière première dans la fabrication de dispositifs optiques et/ou opto-électroniques et possédant, entre autres et cumulativement, les propriétés intrinsèques correspondant aux exigences 1 à 4 mentionnées ci-dessus.

Pour atteindre cet objectif parmi d'autres, la Demanderesse a eu le mérite de mettre en évidence, de façon totalement surprenante et inattendue, une nouvelle famille de polymères réticulables, utilisables notamment en optique et en optique non linéaire et dont les extrémités des chaînes polymères sont fonctionnalisées par des fonctions réactives de nature différente de celles majoritairement mises en jeu pour la polymérisation et l'obtention du squelette polymère.

## EXPOSE DE L'INVENTION :

Il s'ensuit que la présente invention concerne un polymère réticulable, utilisable en optique et en optique non linéaire, comprenant au moins un chromophore et caractérisé en ce qu'il présente, sur au moins deux de ses extrémités, au moins une fonction réactive terminale de nature chimique différente de celle de la fonction majoritairement mise en jeu dans la polymérisation et l'obtention du squelette polymère,

- en ce que la fonction réactive terminale répond à la formule suivante :

Ⓐ

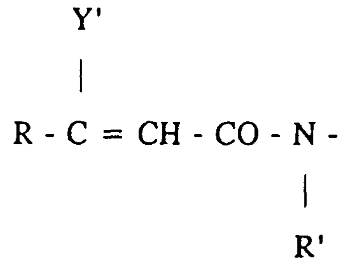

dans laquelle :

- Y' représente H, $CH_3$ ou Cl,
- les radicaux R représentent, indépendamment, un atome d'hydrogène ou des radicaux alcoyle ou alcoylidène de bas poids moléculaire (de $C_1$ à $C_6$) éventuellement substitué,
- R' représente, indépendamment, un groupe acyle de $C_1$ à $C_6$, éventuellement substitué, ou un groupe acylidène de $C_1$ à $C_6$, éventuellement substitué et/ou insaturé,
- R et R' étant, de préférence, reliés entre eux pour former un hétérocycle de 5 à 7 chaînons,
  et, plus préférentiellement encore, choisis de manière que la formule Ⓐdevienne la formule Ⓑ:

Ⓑ

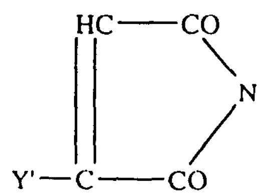

- et en ce qu'il est réticulable, après avoir été mis sous forme de film puis séché, cette réticulation s'opérant par pontage(s) résultant :

  * de la réaction, entre elles, des fonctions réactives terminales de différents squelettes polymères,
  * et éventuellement de la réaction entre ces fonctions réactives terminales du polymère et un auxiliaire de réticulation.

Ces nouveaux polymères, que l'on peut qualifier de téléchéliques, répondent parfaitement au cahier des charges évoqué ci-avant. En effet, cette classe de polymères optiques et/ou optiquement non linéaires possèdent, à la fois, les avantages des réseaux réticulés et les avantages des systèmes thermoplastiques.
Des systèmes réticulés, ils conservent :

- la rigidité diélectrique,
- la stabilité des propriétés fonctionnelles dans le temps et en température,
- l'insolubilité.

Des systèmes thermoplastiques, ils présentent :

- la possibilité d'ajuster finement les propriétés fonctionnelles (indice, absorption, susceptibilité non linéaire),
- de bonnes propriétés de mise en oeuvre (polarisation, adhésion entre couches),
- une bonne résistance à la fissuration.

Ces résultats sont surprenants car rien ne pouvait laisser penser, a priori, que la seule fonctionnalisation des extrémités du squelette polymère permettrait de disposer d'un nombre suffisant de fonctions réactives, pour aboutir à un niveau de réticulation convenable, tout en procurant au matériau les propriétés 1 à 4 visées ci-dessus.
Conformément à l'invention, l'expression "fonction réactive terminale", désigne toute fonction chimique susceptible de générer une ou plusieurs liaisons, de préférence covalentes et permettant ainsi de solidariser le squelette polymère considéré à une autre entité chimique, qui peut, notamment, être constituée par un autre squelette polymère de même nature.
Plus précisément, la réactivité terminale s'entend ici comme une aptitude à la réticulation, de manière à former

un réseau cohésif de polymères optiques, sans pour autant que les propriétés optiques attendues pour ces polymères s'en trouvent affectées.

Selon un mode préféré de mise en oeuvre de l'invention, chaque fonction réactive terminale comprend une double liaison

En pratique, la fonction réactive terminale est, par exemple, sélectionnée parmi la liste de fonctions suivantes : maléimides, nadimides, acryliques, métacryliques, acrylamides, vinyles, styryles, allyles, silyles, cyanates, isocyanates, thiocyanates, cyanamides, nitriles, époxy, acétylène ou analogues, ainsi que leurs dérivés.

Pour autant qu'elles différent de la fonction de polymérisation majoritaire dans le squelette polymère, étant entendu que le terme "majoritairement" doit se comprendre par référence à un nombre de moles pour cent, les fonctions réactives terminales peuvent être identiques ou distinctes à chacune des extrémités du polymère considéré. En effet, il peut être intéressant de différencier les deux fonctions réticulables pour adapter les caractéristiques de réticulation à l'application choisie (réticulation en deux temps, par exemple).

D'un point de vue quantitatif, il a pu être déterminé, conformément à l'invention, que le ratio molaire en nombre :

$$\frac{\textit{fonctions réactives terminales}}{\textit{fonctions de polymérisation élémentaires du squelette polymère}}$$

s'établit, avantageusement, entre 0,004 et 0,5 de préférence entre 0,004 et 0,4 et, plus préférentiellement encore, entre 0,04 et 0,2.

S'agissant du squelette polymère, il peut être de structure variable : linéaire, branchée, arborescente, "arachnéenne" ...

Avantageusement, ce squelette polymère comprend des fonctions de polymérisation choisies parmi au moins l'une des fonctions suivantes : uréthane, ester, amide, éther, carbone-carbone, imide, sulfure, silane, siloxane. Les fonctions uréthane et ester sont particulièrement préférées.

Il va de soi qu'il est tout à fait envisageable de combiner plusieurs des susdites fonctions de polymérisation pour obtenir un squelette copolymère conforme à l'invention.

Le chromophore de ces polymères optiques peut être apporté, soit par un monomère ou structure porteur de deux fonctions de polymérisation, soit par un groupe pendant relié au squelette polymère par un ou plusieurs ponts de liaison.

Le chromophore peut être tout groupement organique actif en ONL, tel que défini et exemplifié dans l'article de H. E. KATZ, C. W. DIRK, K. D. SINGER, T. E. SOHN "Mol. Cryst. Liq. Cryst. inc. non lin. opt." (1988), 157, 525 et dans les demandes de brevets français ayant les numéros suivants : **88-05 214, 88-12 028, 88-12 079, 88-12 080, 89-02 271, 89-04 232, 89-05 870, 89-10 696, 89-10 197, 89-00 377, 90-00 575, 90-02 336, 90-05 420.**

En particulier, on peut citer les chromophores de formule générale suivante : E-$Z_1$-X=Y-$Z_2$-N, telle que décrite par la demande de brevet français **2 667 315,** ainsi que les chromophores de type diazo, de type stilbène (cf. brevet **US 4 757 130)** ou de type alcyne (cf. brevet **US 4 603 187).**

En définitive, le chromophore peut être choisi parmi les unités azobenzéniques, stilbéniques ou dérivés, ou bien encore polyéniques. Dans cette dernière famille d'unités, le composé de formule suivante est particulièrement préféré :

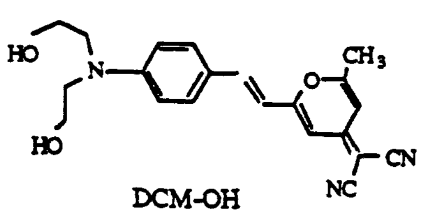

DCM-OH

Conformément à une disposition avantageuse de l'invention, le polymère possède une masse moléculaire comprise entre 1 000 et 500 000 D, de préférence entre 1 000 et 100 000 D et, plus préférentiellement encore, entre 1 000 et 50 000 D.

La présente invention concerne, également, les polymères de structures décrites ci-avant et se présentant sous forme réticulée.

Les polymères réticulés comprennent des ponts constitués uniquement par des fonctions réactives terminales de différentes chaînes polymères et, éventuellement, des ponts formés par un auxiliaire de réticulation reliant au moins deux fonctions réactives terminales.

A titre d'exemple d'auxiliaire de réticulation on peut citer :

- l'éthylèneglycoldiacrylate,
- l'éthylèneglycoldiméthacrylate,
- l'éthylèneglycolcyanoacrylate,
- l'éthylèneglycol-bis (4-maléimidobenzoate),
- l'éthylèneglycol-bis (nadimidobenzoate),
- l'éthylèneglycol-bis (1-benzocyclobutène carboxylate),
- l'éthylène diacrylamide,
- le divinylbenzène,
- le phényldiisocyanate,
- le phénylènediisothiocyanate,
- le polyvinylsilane,
- la N-vinylpyrrolidinone,
- le 4,4'-diaminodiphényl-méthane,
- le 4,4'-dimaléimidodiphényl-méthane, ...

Suivant un premier mode de synthèse des polymères suivant l'invention, on met en oeuvre un agent de terminaison porteur d'une fonction réactive terminale donnée. Cet agent de terminaison est un monomère, chromophore ou non, monofonctionnalisé par la fonction réactive terminale. En quantité stoechiométrique moindre, par rapport aux monomères de polymérisation destinés à former le squelette polymère, cet agent de terminaison peut être ajouté à divers moments de la réaction de polymérisation **(voie A)**.

Selon un deuxième mode de synthèse des polymères suivant l'invention, on produit, tout d'abord, le squelette polymère à partir de monomères, constitués ou non par des chromophores, puis on greffe ensuite directement, sur au moins deux des extrémités du squelette polymère, au moins une fonction réactive terminale, et ce sans passer par l'intermédiaire d'un (co)monomère porteur de ladite fonction terminale **(voie B).**

Dans ces deux modes de synthèse, il est, éventuellement, possible de procéder ultérieurement au branchement de chromophores sur le squelette polymère.

## POSSIBILITE D'APPLICATION INDUSTRIELLE :

Les polymères réticulables selon l'invention sont des matériaux qui peuvent être mis en forme (films), puis réticulés pour être ensuite mis en oeuvre dans des dispositifs optiques, tels que des guides d'ondes ou des dispositifs optoélectroniques, tels que par exemple des interrupteurs, modulateurs, coupleurs directionnels, bistables. L'ajustabilité de l'indice de réfraction en optique et l'activité ONL, élevée et stable, font partie des avantages essentiels des polymères conformes à l'invention.

De plus, les polymères de l'invention possèdent, à la fois, les avantages des réseaux réticulés (rigidité diélectrique, stabilité des propriétés fonctionnelles dans le temps et avec la température, insolubilité) et ceux des polymères thermoplastiques (possibilité d'ajuster finement les propriétés fonctionnelles, mise en oeuvre aisée, peu de fissuration).

Un autre atout des polymères de l'invention découle de la possibilité de modulation indépendante d'au moins une des caractéristiques appartenant à l'un au moins des trois groupes de propriétés qu'ils possèdent :

**1**° - propriétés fonctionnelles,
**2**° - stabilité de ces propriétés fonctionnelles,
**3**° - ajustabilité de ces propriétés fonctionnelles,
**4**° - propriétés de mise en oeuvre.

Il est ainsi envisageable de modifier, pour une application donnée, par exemple la transparence ou la Tg, en apportant la fonctionnalité nécessaire : la substitution de la fonction de polymérisation ester (exemple 17) à la fonction uréthane (exemple 16), améliore la transparence à 1 320 nm et à 1 550 nm, sans incidence sur les autres spécifications du polymère.

## MEILLEURE MANIERE DE REALISER L'INVENTION :

D'autres avantages, des particularités de mise en oeuvre et des variantes de l'invention apparaîtront plus clairement au vu des exemples donnés ci-dessous uniquement à titre indicatif.

## EXEMPLES

Par convention, un polymère téléchélique noté, par exemple polyuréthane/maléimide dans ce qui suit, est un polymère dont le squelette est un polyuréthane et dont les extrémités sont des fonctions réactives terminales de nature maléimide.

## SYNTHÈSE DES CHROMOPHORES MONOFONCTIONNALISÉS UTILISÉS POUR LA SYNTHÈSE DES POLYMÈRES TÉLÉCHÉLIQUES

### EXEMPLE 1 : CHROMOPHORE 1.

Dans 400 ml de dichlorométhane sec, on dissous 25,1 g de Disperse Red 17 (VILMAX) (DR17) et on refroidit la solution à l'aide d'un bain de glace. On ajoute 19 g de chlorure de l'acide maléimidobenzoïque et 7 g de pyridine séchée préalablement sur tamis. On laisse la solution revenir lentement à température ambiante et on poursuit l'agitation pendant plusieurs heures. On filtre la solution et on précipite le produit dans le méthanol. Pour purifier le produit monosubstitué visé (élimination des résidus de DR17 et de disubstitué), on le lave à l'éthanol et on le recristallise plusieurs fois.

①

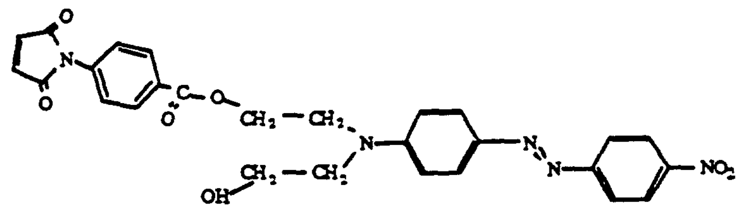

### EXEMPLE 2 : CHROMOPHORE 2.

Dans 80 ml de dichlorométhane sec, on dissous 3 mmol (0,942 g) de Disperse Red 1 (VILMAX) (DR1). On refroidit la solution et l'on ajoute, au goutte à goutte, 4 mmol de chlorure d'acryloyl (0,362 g), ainsi qu'une quantité stochiométrique de pyridine séchée. On agite la solution en laissant revenir le mélange à température ambiante. Une fois la réaction achevée, on filtre et on précipite le produit dans l'éther. Il est ensuite rincé, séché, puis recristallisé.

②

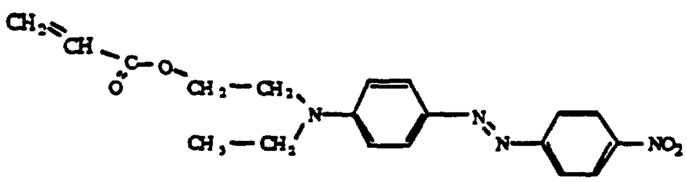

### EXEMPLE 3 : CHROMOPHORE 3.

Dans le dichlorométhane, on dissous 3 mmol (1,03 g) de DR17. La solution est refroidie dans un bain de glace et on ajoute 3 mmol de chlorure d'acryloyl (0,270 g), ainsi qu'une quantité stoechiométrique de pyridine. La solution est agitée pendant plusieurs heures. Le produit est précipité dans le méthanol, séché et recristallisé plusieurs fois.

③

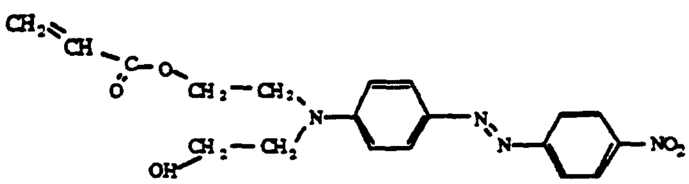

**EXEMPLE 4 : CHROMOPHORE 4.**

Dans le dichlorométhane, on dissous 3 mmol (1,03 g) de DR17. La solution est refroidie dans un bain de glace et on ajoute 3 mmololes de chlorure d'acide 4-vinylbenzoïque (0,270 g), ainsi qu'une quantité stoechiométrique de pyridine. La solution est agitée pendant plusieurs heures. Le produit est précipité, séché et recristallisé plusieurs fois.

④

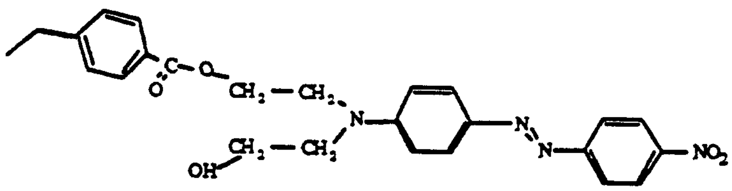

**EXEMPLE 5 : CHROMOPHORE 5.**

On dissous dans l'acétone 10 mmol de composé a représenté ci-dessous. On ajoute alors 10 mmol de BrCN et une quantité stoechiométrique de triéthylamine selon le mode opératoire décrit par FYFE et al. ("Macromolécules" 25, 6289, 1992).
Après précipitation et recristallisation dans un mélange acétone-heptane, on obtient 6,5 mmol du chromophore 5 représenté ci-dessous.

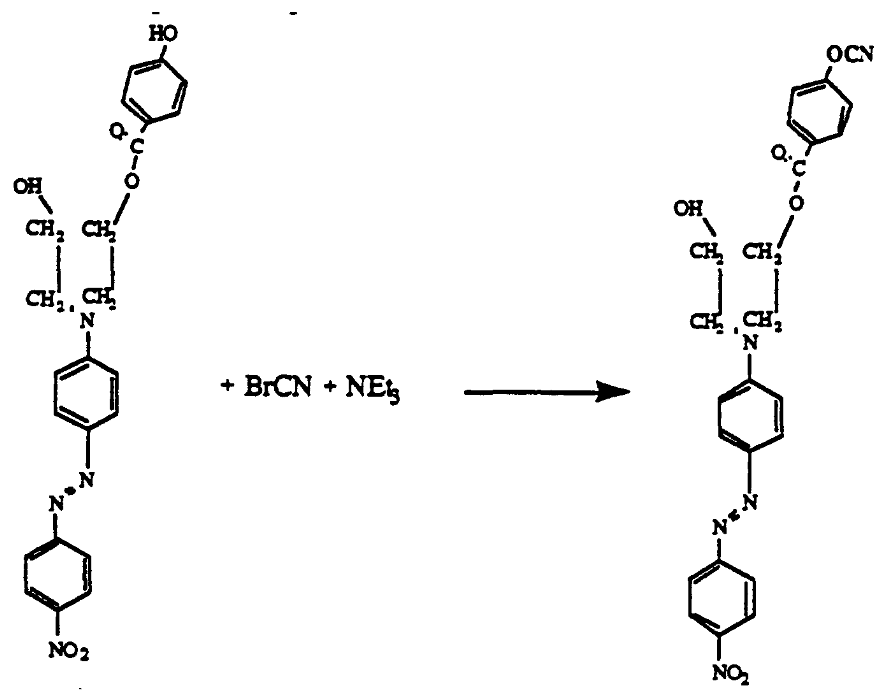


composé*a* Chromophore 5

***

**SYNTHÈSE DES POLYMÈRES TÉLÉCHÉLIQUES**

**EXEMPLE 6 : SYNTHÈSE D'UN POLYURÉTHANE TERMINÉ MALÉIMIDE. VOIE A.**

Dans un tricol de 50 ml, on introduit 1,54 grammes de chromophore DR17 (4,48 mmol) et, sous azote, 10 ml de diméthylacétamide (DMAC). La solution est portée à 60° C et on ajoute un léger excès de tolyidiisocyanate (5 mmol,

0,87 g). Après six heures de synthèse, on ajoute 0,275 g de chromophore 1 (0,52 mmol). La solution est laissée sous agitation durant la nuit. Le lendemain, on précipite le polymère dans le méthanol, la poudre est séchée sous vide puis redissoute dans le THF pour être reprécipitée dans le cyclohexane.
Les analyses résonnance magnétique nucléaire (RMN), chromatographie par perméation de gel (GPG), analyse thermogravimétrique (TGA), calorimétrie différentielle à balayage (DSC), confirment la structure du polymère obtenu :

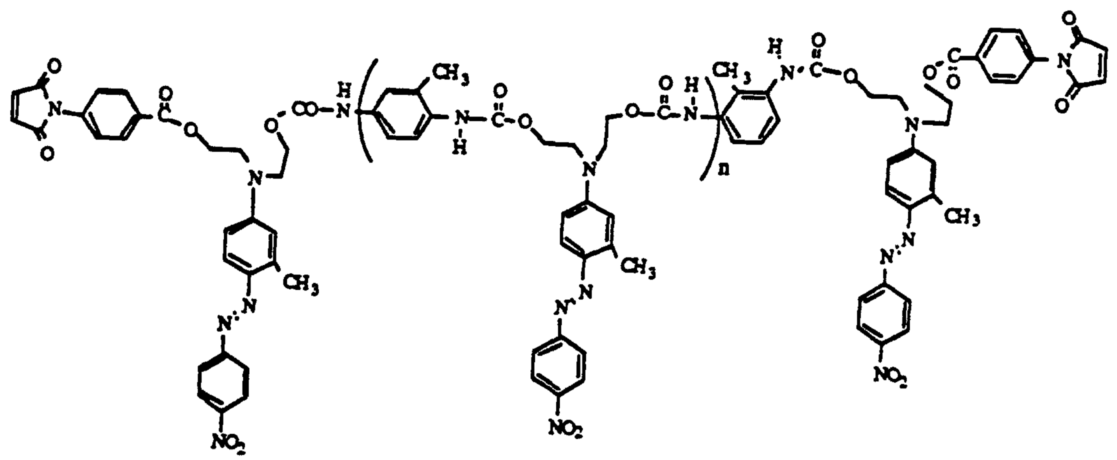

$3 \leq n \leq 8.$

Un film obtenu par "spin coating" à partir d'une solution dans la DMAC est étudié. La Tg du film polymérique soluble est de 96° C. Après un traitement thermique de 4 heures à 180° C, le film est insoluble et sa Tg est de 178° C.

## EXEMPLE 7 : SYNTHÈSE D'UN POLYURÉTHANE TERMINÉ MALÉIMIDE. VOIE B.

Dans un tricol de 250 ml, on introduit 1,54 grammes de DR17 (4,48 mmol) et, sous azote, 10 ml de diméthylacétamide (DMAC). La solution est portée à 60° C et on ajoute 0,8 équivalent molaire de tolyldiisocyanate (3,59 mmol, 0,65 g).
Après quatre heures de synthèse, on ajoute le chlorure de l'acide maléimidobenzoïque (0,8 mmol) et une quantité stoechiométrique de pyridine. La solution est laissée à température ambiante et sous agitation durant la nuit. Le lendemain, on précipite le polymère dans le méthanol, la poudre est séchée sous vide, puis redissoute dans le THF pour être reprécipitée dans le cyclohexane.
Les analyses RMN, GPC, TGA, DSC confirment la structure du polymère obtenu. Elle est identique à celle du polymère de l'exemple 6.
Ce polymère (polyuréthane terminé maléimide) satisfait à de nombreuses conditions d'utilisation : Tg stable qui permet des cycles de polarisation aisés, insolubilité, grande stabilité d'orientation, transparence à 1 320 nm, facilité de synthèse.
La possibilité d'échanger facilement le chromophore, intervenant dans la synthèse du squelette polymère, est illustrée dans les exemples suivants (de 8 à 16). Pour ces différents produits, la voie B a été utilisée.

## EXEMPLE 8 : SYNTHÈSE D'UN POLYURÉTHANE TERMINÉ MALÉIMIDE AVEC UN DÉRIVÉ DE NATURE STILBÉNIQUE.

La synthèse du 4-(N,N dihydroxyéthylamino)-4' nitrostilbène (DHANS) est décrite dans le brevet **WO 91/03 001** et dans le brevet **US 4 757 130.** Dans un tricol de 50 ml, on introduit 1,5 grammes de DHANS (4,48 mmol) et, sous azote, 10 ml de diméthylacétamide (DMAC). La solution est portée à 60°C et on ajoute 0,8 équivalent molaire de tolyldiisocyanate (3,59 mmol, 0,65 g). Après quatre heures de synthèse, on ajoute le chlorure de l'acide maléimidobenzoïque (0,8 mmol) et une quantité stoechiométrique de pyridine. La solution est laissée à température ambiante et sous agitation durant la nuit. Le lendemain, on précipite le polymère dans le propanol, la poudre est séchée sous vide, puis redissoute dans le THF pour être reprécipitée dans l'éther.
Les analyses RMN, GPC, TGA, DSC confirment la structure du polymère obtenu :

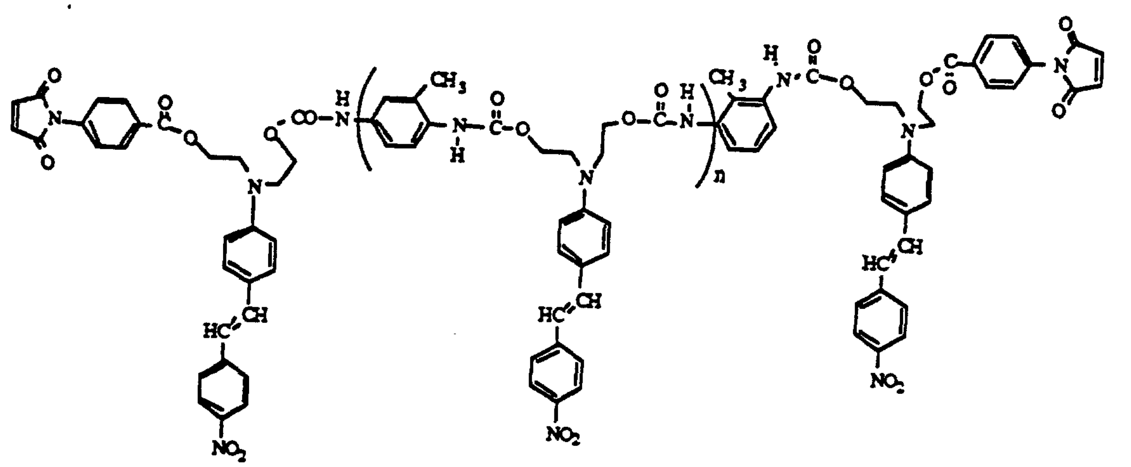

Une solution de ce polymère peut être mise sous forme de film par spin-coating. Le film obtenu a une Tg de 103° C. Après un traitement thermique de 4 heures à 180° C, le film est devenu insoluble et sa Tg est maintenant de 183° C.

**EXEMPLE 9 : SYNTHÈSE D'UN POLYURÉTHANE-MALÉIMIDE AVEC LE 4-DICYANO-MÉTHYLÈNE-2-MÉTHYL-6-P-DIÉTHANOLAMINOSTYRYL-4H-PYRANE (DCM-OH).**

Le DCM-OH, est un colorant laser dont la synthèse est décrite par J. BOURSON et al. dans l'article Optics Communication 72 -6), 367, 1989. Ces auteurs ne mentionnent pas de propriétés ONL associées à cette molécule qui est représentée ci-dessous :

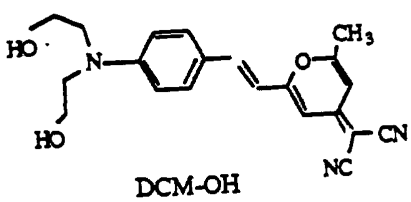

DCM-OH

La fonctionnalisation permet de synthétiser un polyuréthane par exemple. Dans un réacteur de 50 ml on introduit 4,48 mmol de DCM-OH et, sous azote, 10 ml de diméthylacétamide (DMAC). La solution est portée à 60° C et on ajoute 0,8 équivalent molaire de totyldiisocyanate (3,59 mmol, 0,65 g). Après quatre heures de synthèse, on ajoute le chlorure de l'acide maléimidobenzoïque (0,8 mmol) et une quantité stoechiométrique de pyridine. La solution est laissée à température ambiante et sous agitation durant la nuit. Le lendemain, on précipite le polymère dans l'éthanol, la poudre orange est séchée sous vide, puis redissoute dans le THF pour être reprécipitée dans l'éthanol.

La structure du polymère confirmée par DSC, RMN, GPC et TGA est la suivante :

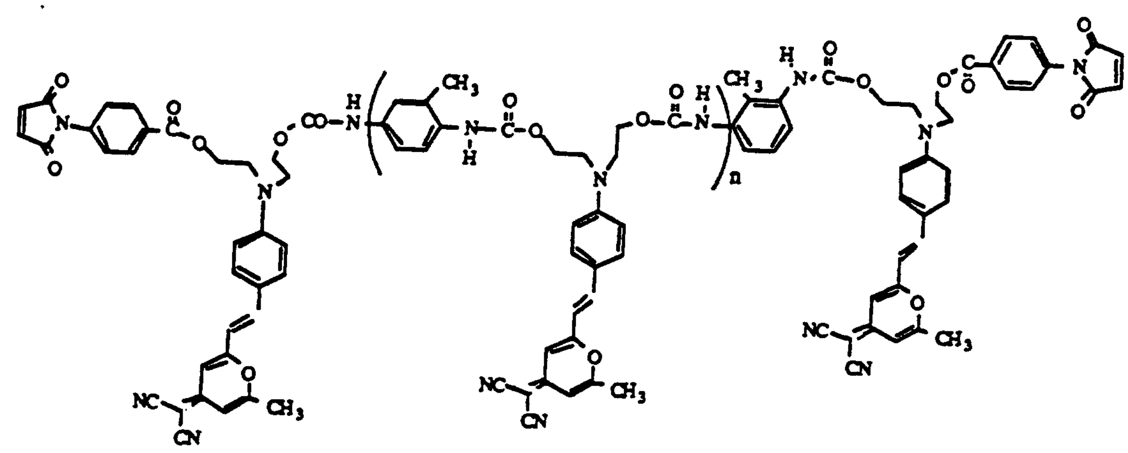

Un film obtenu par "spin coating" à partir d'une solution dans la DMAC est réticulé. La Tg du film polymère soluble, avant réticulation, est de 90° C. Après un traitement thermique de 4 heures à 180° C, le film est devenu insoluble et sa Tg est de 175° C.

**EXEMPLE 10 : SYNTHÈSE D'UN COPOLYURÉTHANE-MALÉIMIDE AVEC LE 3-DICYANOMÉTHYLÈNE-5,5-DIMÉTHYL-1(P-DIÉTHANOLAMINOSTYRYL) CYCLOHEXÈNE.**

La synthèse du colorant est décrite dans le brevet **US 4 985 528** concernant des polymères pour l'optique non linéaire. La formule du colorant est la suivante :

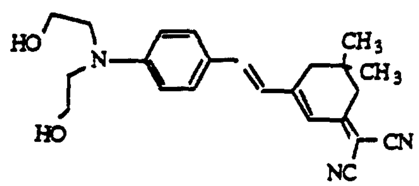

Un copolymère téléchélique peut être obtenu en s'inspirant de la synthèse décrite dans l'exemple 6. Dans un réacteur de 250 ml, on introduit 4,48 mmoles de 3-dicyanométhylène-5, 5-diméthyl-1(p-diéthanolaminostyryl) cyclohexène, 2,02 mmoles de N,N-dihydroxyéthyl-méta-toluidine et, sous azote, 10 ml de diméthylacétamide (DMAC). La solution est portée à 60° C et on ajoute 0,8 équivalent molaire de tolyldiisocyanate (5,2 mmoles). Après quatre heures de synthèse, on ajoute le chlorure de l'acide maléimidobenzoïque (0,8 mmoles) et une quantité stoechiométrique de pyridine. La solution est laissée à température ambiante et sous agitation durant la nuit. Le lendemain, on précipite le polymère dans le méthanol, la poudre couleur bordeau est séchée sous vide, puis redissoute dans l'acétone pour être reprécipitée dans l'éther.
La structure du polymère confirmée par DSC, RMN, GPC et TGA est la suivante :

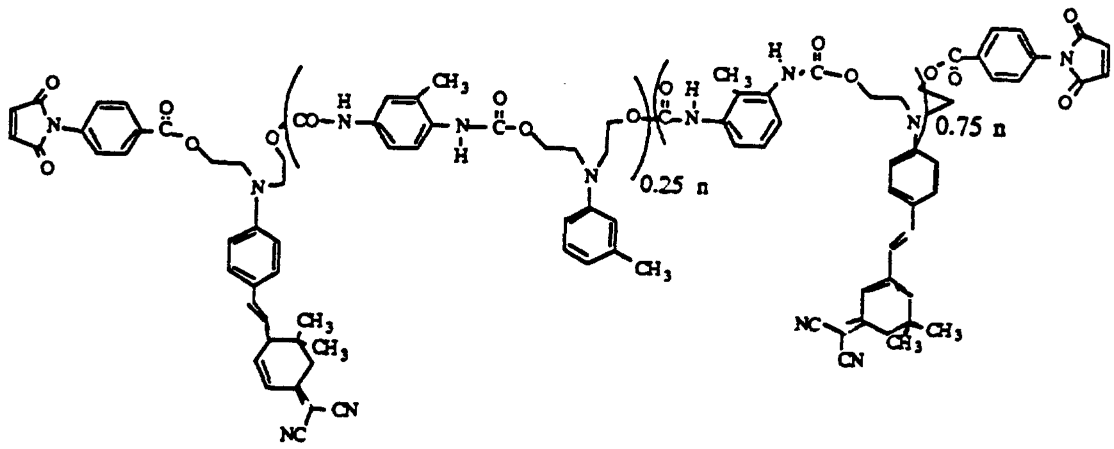

Un film obtenu par "spin coating" à partir d'une solution dans la DMAC est réticulé. La Tg du film polymère soluble avant réticulation est de 115° C. Après un traitement thermique de 4 heures à 180° C, le film est devenu insoluble et sa Tg est de 185° C.

**EXEMPLE 11 : SYNTHÈSE D'UN POLYURÉTHANE-MALÉIMIDE AVEC UN CHROMOPHORE DE TYPE PYRIDINIUM.**

Ce type de chromophore est déjà utilisé comme molécule active dans des polymères à propriétés en optique non linéaire. On peut trouver une description des propriétés et de la synthèse de cette molécule active dans l'article de MARDER S. R. et al., Science, **245**, p. 626, 1989. Pour obtenir le polymère téléchélique, on suit le mode opératoire donné précédemment, c'est-à-dire 4,5 mmol de cette molécule active sont introduites sous azote dans 10 ml de diméthylacétamide (DMAC). La solution est portée à 60° C et on ajoute 0,8 équivalent molaire de tolyldiisocyanate (3,6 mmol). On laisse alors la synthèse se dérouler pendant 4 h, puis on adjoint au milieu réactionnel le chlorure de l'acide maléimidobenzoïque (0,8 mmol) et une quantité stoechiométrique de pyridine. La solution est laissée à température ambiante et sous agitation durant la nuit. Le lendemain, on précipite le polymère dans le méthanol, la poudre orange est séchée sous vide, puis redissoute dans l'acétone pour être reprécipitée dans l'éther.
Un film obtenu par "spin coating" à partir d'une solution dans la DMAC est réticulé. La Tg du film polymérique soluble, avant réticulation, est de 85° C. Après un traitement thermique de 4 h à 180° C, le film est devenu insoluble et sa Tg est de 165° C.

**EXEMPLE 12 : SYNTHÈSE D'UN POLYURÉTHANE TERMINÉ ACRYLIQUE.**

Dans un tricol de 50 ml, on introduit 1,54 grammes de chromophore DR17 (4,48 mmol) et, sous azote, 10 ml de diméthylacétamide (DMAC). La solution est portée à 60° C et on ajoute un léger défaut de tolyldiisocyanate (4 mmol, 0,69 g). Après six heures de synthèse, on ajoute 0,45 g de chlorure d'acryloyle (0,5 mmol), ainsi qu'une quantité stoechiométrique de pyridine. La solution est laissée sous agitation à température ambiante pendant quelques heures, puis on précipite le polymère dans le méthanol. La poudre est séchée sous vide puis redissoute dans le THF pour être reprécipitée dans l'heptane.

N. B. : La voie A serait envisageable à l'aide du chromophore **3**.
Les analyses RMN, GPC, TGA, DSC confirment la structure du polymère obtenu, représenté ci-dessous.

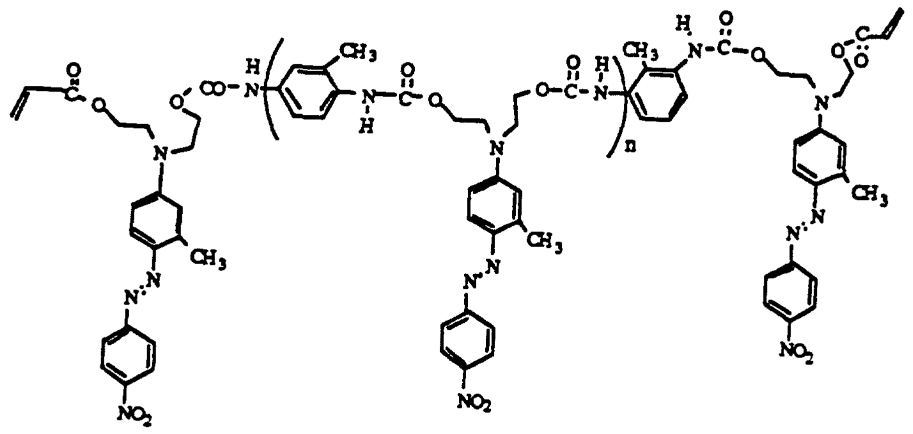

3 ≤n ≤ 8.

Un film obtenu par "spin coating" est réticulé thermiquement pendant 4 heures à 180° C. La Tg avant réticulation est de 113° C, alors qu'elle est de 147° C après réticulation. Le film, d'aspect mat, est insoluble.

**EXEMPLE 13 : SYNTHÈSE D'UN POLYURÉTHANE TERMINÉ ACRYLAMIDE.**

Dans un tricol de 250 ml on introduit 1,54 grammes de chromophore DR17 (4,48 mmol) et, sous azote, 10 ml de diméthylacétamide (DMAC). La solution est portée à 60° C et on ajoute un léger excès de tolyldiisocyanate (5 mmol, 0,87 g). Après six heures de synthèse, on ajoute 0,037 g d'acrylamide (0,52 mmol). La solution est laissée sous agitation à température ambiante durant une heure. On précipite le polymère dans le méthanol, il est séché sous vide, puis redissous dans le THF pour être reprécipité dans le cyclohexane.
Les analyses RMN, GPC, TGA, DSC confirment la structure du polymère obtenu, représenté ci-dessous.

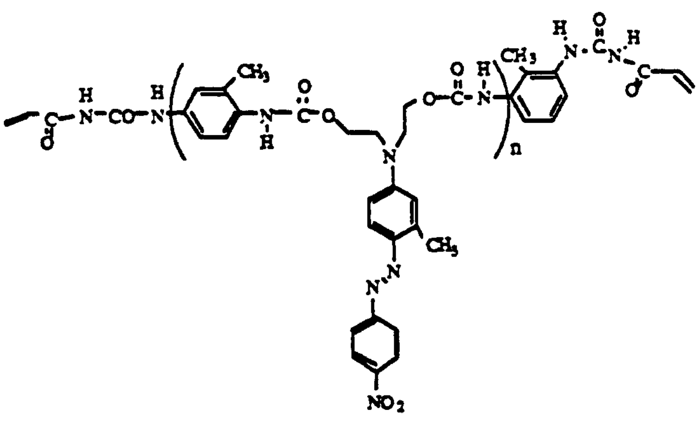

3 ≤ n ≤ 8.

**EXEMPLE 14 : SYNTHÈSE D'UN POLYURÉTHANE TERMINÉ STYRYLE.**

Dans un tricol de 250 ml, on introduit 1,54 grammes de chromophore DR17 (4,48 mmol) et, sous azote, 10 ml de diméthylacétamide (DMAC). La solution est portée à 60° C et on ajoute un léger défaut de tolyldiisocyanate (4 mmol, 0,69 g). Après six heures de synthèse, on ajoute 0,250 g de chromophore 4 (0,5 mmol). La solution est laissée sous agitation à température ambiante pendant quelques heures, puis on précipite le polymère dans le méthanol. Il est séché sous vide puis redissous dans le THF pour être reprécipité dans l'heptane.
Les analyses RMN, GPC, TGA, DSC confirment la structure du polymère obtenu, représenté ci-dessous.

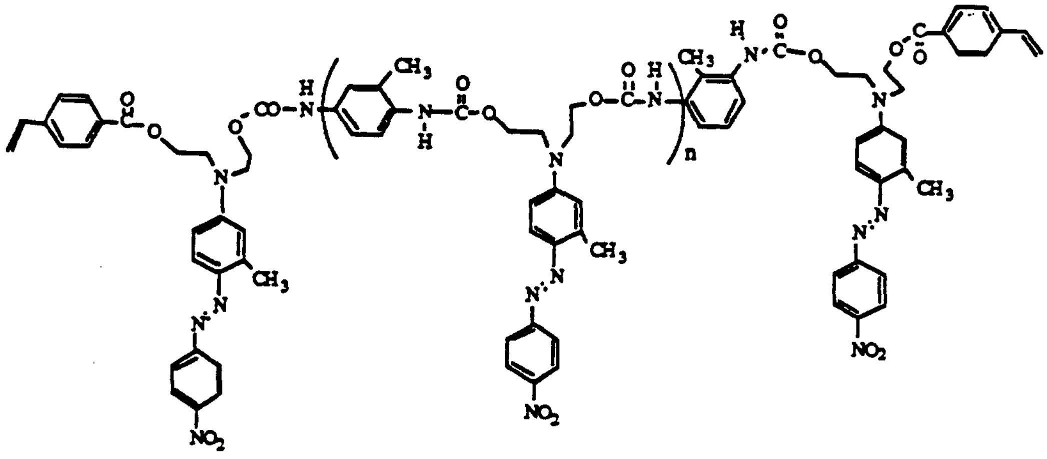

3 ≤ n ≤ 8.

**EXEMPLE 15 : SYNTHÈSE D'UN POLYURÉTHANE TERMINÉ CYANATE.**

Pour synthétiser ce polymère, on suit le mode opératoire de l'exemple 12, voie B. Ainsi, part-on de 1,54 g de DR 17 dissous dans 10 ml de DMAC anhydre. Cette solution est portée à 60° C et on lui ajoute 0,930 g (5,3 mmol) de TDI. Après 4 h de synthèse, on ajoute 0,2 équivalent molaire du chromophore 5. La synthèse est poursuivie pendant quelques heures, puis on laisse revenir la solution à température ambiante. On précipite le polymère dans l'acétone. Le précipité est rincé, puis séché sous vide. Les analyses spectroscopiques confirment la structure du polymère.

**EXEMPLE 16 : SYNTHÈSE D'UN POLYURÉANE TERMINÉ MALÉIMIDE AVEC LE CHROMOPHORE UTILISE DANS L'EXEMPLE 10.**

Dans un réacteur de 100 ml, on introduit 5,3 mmoles du chromophore utilisé dans l'exemple 10, 6,32 mmoles de 1,5 napthyl diisocyanate et 8 ml de DMAC. La solution est portée à 60° C et maintenue sous agitation et sous azote. Après 30 min, on ajoute 2,1 mmoles de 4-maléimido phénol, puis laissé sous agitation pendant 3 h. Le polymère est récupéré par précipitation dans le méthanol, puis séché sous vide à 50° C pendant 15 h.
La Tg du polymère soluble avant réticulation est de 155° C. Après un traitement thermique de 1 h à 220° C, le polymère devient insoluble dans la DMAC et sa Tg est de 192° C.

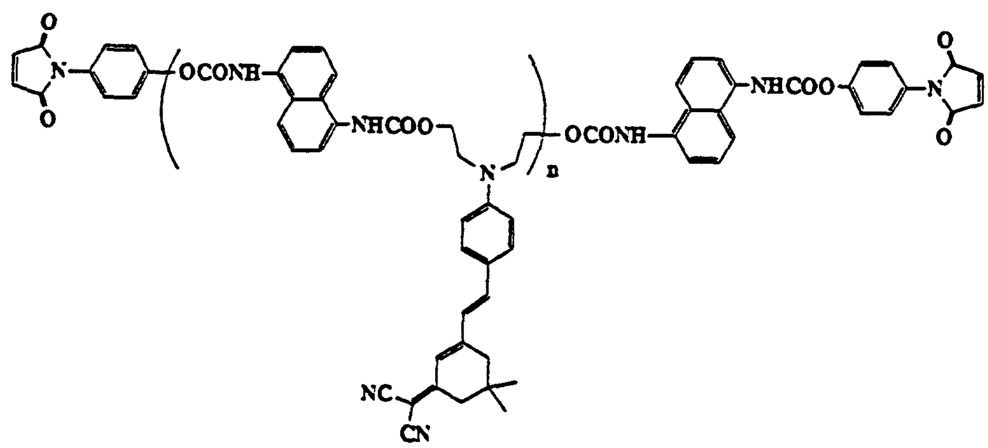

**EXEMPLE 17 : SYNTHÈSE D'UN POLYESTER TERMINÉ MALÉIMIDE.**

On introduit 1,54 grammes de DR17 (4,48 mmol) dans un tricol de 250 ml. On ajoute 10 ml de DMAC anhydre

sous azote que l'on chauffe à 60° C et, au pousse seringue, un mélange équimolaire de dichlorure d'acide téréphathalique et d'acide isophtalique, soit 1,78 mmol de chaque. Une quantité stoechiométrique de pyridine est additionnée à la solution de DMAC préalablement à l'ajout. Après 6 heures de synthèse, on ajoute 180 mg de chlorure de l'acide maléimidobenzoïque et 20 mg d'acide maléimidobenzoïque et 65 µl de pyridine. On laisse sous agitation toute la nuit à température ambiante. La solution est précipitée le lendemain matin dans le méthanol.
Les analyses RMN, GPC, DSC et TGA confirment la nature et la structure du polymère qui est représenté ci-dessous.

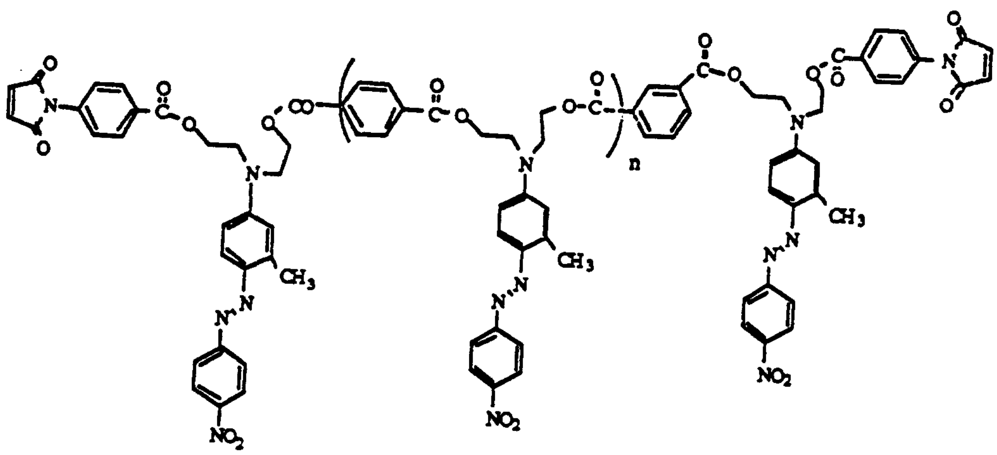

$3 \leq n \leq 8$.

Un film obtenu par "spin coating" à partir d'une solution à 27 % w dans la DMAC est étudié. La Tg du film polymérique soluble est de 125° C. Après un traitement thermique de 4 heures à 180° C, le film est insoluble et sa Tg est de 135° C.

**EXEMPLE 18 : SYNTHÈSE D'UN POLYESTER/MALÉIMIDE EN UTILISANT LE CHROMOPHORE 1 (VOIE A).**

On suit la méthode décrite pour la synthèse d'un polyuréthane selon la voie A, exemple 6. On obtient un polyester en tout point comparable à celui de l'exemple précédent.

**EXEMPLE 19 : SYNTHÈSE D'UN POLYACRYLATE TERMINÉ MALÉIMIDE (VOIE B).**

Pour obtenir un tel polymère, on utilise les colorants dont les synthèses sont décrites précédemment. On dissous dans 100 ml de dioxanne, fraîchement distillé et gardé sous azote, 5 mmol de chromophore 2 (1,91 g) et 1 mmol du chromophore 3 (0,4 g), ainsi que 2 mmol d'acrylate de méthyl (0,13 g). On ajoute 5 % massique d'AIBN (0,150 g) et on porte la solution à 80° C. Après quelques heures, on ajoute 1 % supplémentaire d'AIBN et on laisse la polymérisation se poursuivre. Après 6 heures, par GPC, on constate que la polymérisation est achevée. On ajoute alors 1,5 mmol (0,332 g) de chlorure de l'acide maléimidobenzoïque et une quantité stochiométrique de pyridine. On abaisse la température de synthèse à 40° C et on maintient l'agitation durant la nuit. Le lendemain, le polymère est précipité dans l'heptane, lavé et séché sous vide.
Les analyses RMN, GPC, IR et DSC confirment la structure du polymère obtenu, dont une représentation peut être :

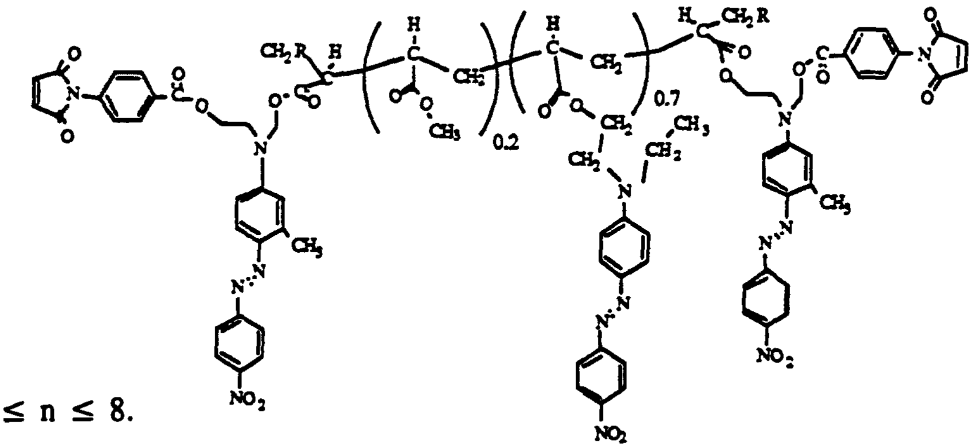

3 ≤ n ≤ 8.

Un film obtenu par "spin coating" à partir d'une solution à 27 % poids dans la DMAC est étudié. La Tg du film polymère soluble est de 75° C. Après un traitement thermique de 4 heures à 160° C, le film est insoluble et sa Tg est de 120° C.

**EXEMPLE 20 : SYNTHÈSE D'UN POLYCARBONATE TERMINÉ MALÉIMIDE (VOIE B).**

Dans un tricol de 250 ml, on introduit 1,54 grammes de chromophore DR17 (4,48 mmol) et, sous azote, 8 ml de diméthylacétamide (DMAC). La solution est portée à 60° C et on ajoute, au pousse seringue, un léger défaut stoechiométrique de triphosgène (4,0 mmol) en solution dans 2 ml de DMAC. Après six heures de synthèse, on ajoute 0,45 g de chlorure de maléimidobenzoïque (0,5 mmol), ainsi qu'une quantité stoechiométrique de pyridine. La solution est laissée sous agitation à température ambiante pendant quelques heures, puis on précipite le polymère dans le méthanol. La poudre est séchée sous vide, puis redissoute dans le THF pour être reprécipitée dans l'heptane.
Les analyses RMN, GPC, TGA, DSC confirment la structure du polymère obtenu, représenté ci-dessous.

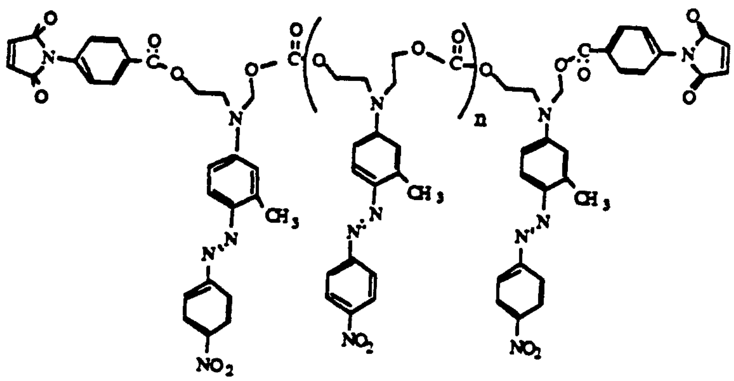

**EXEMPLE 21 : SYNTHÈSE D'UN POLYSILOXANE/MALÉIMIDE (VOIE B).**

Pour la synthèse d'un tel polymère, on s'inspire du mode opératoire décrit dans le brevet **US 4 230 898.** La synthèse du (N-éthyl,N-2ène-propyl)amino-4'cyanobiphényl à partir du 3-bromo propène et de N-éthylamino-4'cyanobiphényl est connue de l'homme de l'art. La synthèse du polymère est réalisée en deux étapes. On fait tout d'abord réagir le chromophore sur le poly-méthyl-hydrogène-siloxane, terminé silanol, en solution dans un mélange toluène/1,2dichloroéthane avec 5 % w de catalyseur (acide chloroplatinique) pendant 24 heures à 95° C. La solution est ensuite précipitée dans l'acétone, le précipité est rincé à l'éthanol. Le polysiloxane, partiellement fonctionnalisé, est redissous dans le THF et on ajoute alors un excès de chlorure de maléimidobenzoïque. On laisse tourner la réaction à température ambiante durant la nuit. Le lendemain, le polymère est récupéré par précipitation dans le méthanol, puis séché sous vide. On récupère un polysiloxane à groupes pendants ONL et terminé maléimide. La Tg du polymère est de 15° C. Un film de ce polymère, après un traitement thermique de 2 heures à 120° C et de 2 heures à 160° C, est insoluble et possède une Tg proche de 85° C.

**EXEMPLE 22 : SYNTHÈSE D'UN POLYMÈRE BRANCHÉ TÉLÉCHELIQUE POLYURÉTHANE/MALÉIMIDE (VOIE B).**

Pour préparer un polymère branché téléchélique, on part d'un très faible pourcentage de multifonctionnel (tri, tétra ou penta fonctionnel), sur lequel on fait réagir la totalité du comonomère de polymérisation. On obtient ainsi des points de début de branchement sur lequel la réaction de polymérisation va se poursuivre normalement. On peut donner l'exemple suivant : 2 g de DR 17 (5,85 mmol) sont dissous dans 12 ml de DMAC anhydre sous azote. La solution est portée à 60° C et, simultanément, on ajoute alors 0,5 ml d'une solution dans la DMAC du trimère de l'hexaméthylène diisocyanate (HDI) représenté ci-dessous (ce volume correspond à un ajout de 0,25 mmol de fonctions isocyanates). On laisse cette solution sous agitation à 60° C pendant 1 heure, puis on ajoute au pousse-seringue 4,5 mmol de TDI, soit 780 mg). La solution est laissée pendant 8 heures à 60° C. On ajoute alors, en diminuant la température, 1,8 mmol de chlorure de maléimido benzoïque et une quantité stoechiométrique de pyridine. Cette solution est laissée sous agitation durant la nuit. Le lendemain, on la précipite dans le méthanol. Le polymère est séché sous vide. Les analyses spectroscopiques confirment la structure branchée polyuréthane/maléimide visée.

**EXEMPLE 23 : SYNTHÈSE D'UN POLYURÉTHANE/MALÉIMIDE-ACRYLIQUE (VOIE B).**

Dans un tricol de 50 ml, on introduit 1,54 g de chromophore DR17 (4,48 mmol) et, sous azote, 10 ml de diméthylacétamide (DMAC). La solution est portée à 60° C et on ajoute un léger défaut de tolyldiisocyanate (4 mmol, 0,69 g).
Après six heures de synthèse, on ajoute 0,25 g de chlorure d'acryloyl (0,25 mmol) et 0,25 mmol de chlorure de maléimidobenzoïque, ainsi qu'une quantité stoechiométrique de pyridine. La solution est laissée sous agitation à température ambiante pendant quelques heures, puis on précipite le polymère dans le méthanol. La poudre est séchée sous vide puis redissoute dans le THF pour être reprécipitée dans l'heptane. Statistiquement, on obtient, minoritairement, les polymères terminés maléimide ou acrylique aux deux extrémités et, majoritairement, les polymères terminés maléimide/acrylique.

**EXEMPLE 24 : FILMATURE, ORIENTATION ET RÉTICULATION D'UN POLYMÈRE TÉLÉCHÉLIQUE : EXEMPLE D'UN POLYURÉTHANE/MALÉIMIDE.**

Le polymère de l'exemple 6 est dissous, sous atmosphère d'azote, dans la diméthylacétamide (concentration massique de 20 %). La solution obtenue est filtrée sur 0,2 μ, puis elle est filmée par la technique de la tournette (1 000 tr/min) sur un substrat de verre (corning 7059) recouvert d'une couche d'or de 200 angströms d'épaisseur environ. On obtient un film d'environ 3 μ. Ce film est pré-séché, sous azote, à 50° C durant 5 h, puis séché à 150° C sous vide durant 16 h. Une deuxième couche d'or (200 Angströms) est déposée sur la face supérieure du film et constitue la deuxième électrode de polarisation.
Le film métallisé est ensuite introduit, sous atmosphère d'azote, dans une chambre optique à température contrôlée à ± 0,1° C. Pour réticuler le film, la température de la chambre optique est élevée à 200° C et est maintenue à cette valeur durant 1 h. La Tg après réticulation est de 185° C.
Le film est ensuite porté à 190° C et une tension continue de polarisation Vp = 150 volts est appliquée durant 30 min. L'échantillon est ensuite refroidi à température ambiante en maintenant la tension de polarisation. Les coefficients électro-optiques $r_{13}$ et $r_{33}$ du film sont ensuite mesurés dans la chambre optique par interferométrie Fabry Pérot. Cette technique est exposée en détails par R. MEYRUEIX et al., Nonlinear Optics, vol. 1, p. 201-211, (1991) ou encore C. A. ELDERING et al., Journal of Applied Physics, vol. 69 (6), p. 3676-3686, (1991). On obtient alors $r_{13}$ = 1,8 pm/V et $r_{33}$ = 6,5 pm/V.
L'expérience est répétée avec plusieurs échantillons et pour différentes valeurs de champ de polarisation. Les résultats sont consignés dans le tableau ci-dessous. Les films polarisés sont tous insolubles, ne se fissurent pas et adhèrent parfaitement au substrat (les mêmes caractéristiques sont constatées pour des films non polarisés, non métallisés ou filmés sur d'autres substrats).

| CHAMP DE POLARISATION (V/micron) | COEFFICIENT $r_{33}$ (pm/V) | COEFFICIENT $r_{13}$ (pm/V) |
|---|---|---|
| 50 | 6,5 | 1,8 |
| 75 | 10 | 2,3 |
| 100 | 15 | 3,5 |
| 130 | 20 | 4,4 |

La stabilité de ces coefficients électro-optiques est excellente, la décroissance de $r_{33}$ est non mesurable à 20° C et même à 100° C.
En 17 h, $r_{33}$ décroît de - 8 % à 135° C et de - 50 % à 155° C.

**EXEMPLE 25 : FILMATURE, ORIENTATION ET RÉTICULATION D'UN POLYMÈRE TÉLÉCHÉLIQUE : EXEMPLE D'UN POLYURÉTHANE/MALÉIMIDE.**

Le polymère de l'exemple 10 est mis sous forme de film et séché selon la procédure détaillée dans l'exemple 24, la polarisation s'effectue dans la chambre optique à 200° C. Les coefficients électro-optiques (EO) mesurés sont les suivants.

| CHAMP DE POLARISATION (V/micron) | COEFFICIENT $r_{33}$ (pm/V) | COFFICIENT $r_{13}$ (pm/V) |
|---|---|---|
| 50 | 12 | 3 |
| 75 | 18 | 4 |
| 100 | 26 | 5 |

Le polymère présente, en outre, les propriétés suivantes :

**1**° - Tg stable après plusieurs traitements thermiques,
**2**° - le film adhère parfaitement sur un substrat,
**3**° - le film est insoluble,
**4**° - la stabilité des coefficients électro-optiques est comparable à celle décrite dans l'exemple précédent.

**EXEMPLE 26 : MISE EN FORME, ORIENTATION ET CARACTÉRISATION D'UN POLYMÈRE TÉLÉCHÉLIQUE : EXEMPLE D'UN POLYURÉTHANE/CYANATE.**

Le polymère de l'exemple 15 est mis en forme de film et séché selon la procédure détaillée dans l'exemple 24. La polarisation du film est effectuée à 187° C. Les coefficients EO obtenus sont les suivants.

| CHAMPS DE POLARISATION (V/micron) | COEFFICIENT $r_{33}$ (pm/V) | COEFFICIENT $r_{13}$ (pm/V) |
|---|---|---|
| 50 | 8 | 2,1 |
| 100 | 19 | 4,0 |

Les films caractérisés possèdent des propriétés comparables à celles des exemples précédents (Tg stable après recuit, films insolubles, ne fissurant pas, adhérant aux substrats ...).
La stabilité des coefficients électro-optiques est exceptionnelle : $r_{13}$ ne décroît que de 10 % en 17 h à 140° C.

**Revendications**

**1.** Polymère utilisable en optique et en optique non linéaire, comprenant au moins un chromophore, caractérisé

- en ce qu'il présente, sur au moins deux de ses extrémités, au moins une fonction réactive terminale, de nature chimique différente de celle de la fonction majoritairement mise en jeu dans la polymérisation et l'obtention d'un squelette polymère,
- en ce que la fonction réactive terminale répond à la formule suivante :

Ⓐ

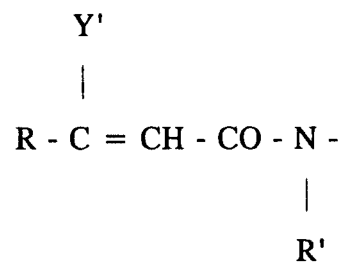

dans laquelle :

- Y' représente H, $CH_3$ ou Cl,
- les radicaux R représentent, indépendamment, un atome d'hydrogène ou des radicaux alcoyle ou alcoylidène de bas poids moléculaire (de $C_1$ à $C_6$) éventuellement substitué,
- R' représente, indépendamment, un groupe acyle de $C_1$ à $C_6$, éventuellement substitué, ou un groupe acylidène de $C_1$ à $C_6$, éventuellement substitué et/ou insaturé,
- R et R' étant, dé préférence, reliés entre eux pour former un hétérocycle de 5 à 7 chaînons,

et, plus préférentiellement encore, choisis de manière que la formule Ⓐdevienne la formule Ⓑ:

Ⓑ

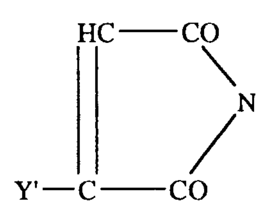

- et en ce qu'il est réticulable, après avoir été mis sous forme de film puis séché, cette réticulation s'opérant par pontage(s) résultant :

* de la réaction, entre elles, des fonctions réactives terminales de différents squelettes polymères,
* et éventuellement de la réaction entre ces fonctions réactives terminales du polymère et un auxiliaire de réticulation.

**2.** Polymère selon la revendication 1, caractérisé en ce que la fonction réactive terminale est choisie parmi la liste des fonctions suivantes : maléimide, nadimide, acrylique, méthacrylique, acrylamide, vinyle, styryle, allyle, sylyle, cyanate, isocyanate, thiocyanate, cyanamide, nitrile, époxy, acétylène.

**3.** Polymère selon la revendication 1 ou 2, caractérisé en ce que le ratio molaire en nombre : fonctions réactives terminales/fonctions de polymérisation élémentaires du squelette polymère, est compris entre 0,004 et 0,5 de préférence entre 0,004 et 0,4 et, plus préférentiellement encore, entre 0,04 et 0,2.

**4.** Polymère selon l'une quelconque des revendications 1 à 3, caractérisé en ce que le squelette polymère comprend des fonctions de polymérisation choisies parmi au moins l'une des fonctions suivantes :
uréthane, ester, amide, imide, éther, carbone-carbone,
sulfure, silane, siloxane ; les fonctions uréthane, ester étant particulièrement préférées.

**5.** Polymère selon l'une quelconque des revendications 1 à 4, caractérisé en ce que le chromophore est choisi parmi les unités azobenzéniques, stilbéniques ou stilbéniques pontées.

**6.** Polymère selon l'une quelconque des revendications 1 à 5, caractérisé en ce que sa masse moléculaire est comprise entre 1 000 et 500 000 D, de préférence entre 1 000 et 100 000 D et, plus préférentiellement encore, entre 1 000 et 50 000 D.

**7.** Polymère, caractérisé en ce qu'il est constitué par un polymère réticulé obtenu par réticulation du polymère selon l'une quelconque des revendications 1 à 6.

**8.** Procédé de préparation, notamment du polymère, selon l'une quelconque des revendications 1 à 6,
caractérisé en ce que :

- on prépare un chromophore mono fonctionnalisé par une fonction réactive terminale,
- et on fait réagir ce chromophore avec un chromophore identique ou différent porteur d'au moins deux fonctions de polymérisation.

**9.** Procédé de préparation, notamment du polymère, selon l'une quelconque des revendications 1 à 6, caractérisé en ce que :

- on prépare le squelette polymère à partir de monomères constitués ou non par du chromophore fonctionnalisé,
- on greffe sur au moins deux des extrémités du squelette polymère au moins une fonction réactive terminale,
- et, éventuellement, on procède au branchement de chromophore sur le squelette polymère.

**10.** Matériau, caractérisé en ce qu'il comporte du polymère selon l'une quelconque des revendications 1 à 9.

**11.** Dispositif optique, caractérisé en ce qu'il est constitué par un matériau selon la revendication 10.

## Patentansprüche

**1.** Polymer, das in der Optik und in der nichtlinearen Optik verwendbar ist und mindestens ein Chromophor enthält, **dadurch gekennzeichnet, dass**

- es an mindestens zwei seiner Enden mindestens eine Abschlussreaktionsfunktion aufweist, die chemisch anders geartet ist als die Funktion, die bei der Polymerisation und bei der Herstellung eines Polymergerüsts hauptsächlich eingesetzt wird,
- die Abschlussreaktionsfunktion der folgenden Formel entspricht:

(A) 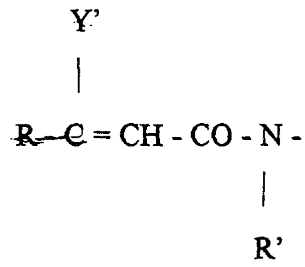

wobei:

- Y' für H, $CH_3$ oder Cl steht,
- die Radikalen R unabhängig voneinander für ein eventuell substituiertes Wasserstoffatom oder Alkylrest oder Alkylidenrest mit niedrigem Molekulargewicht (von $C_1$ bis $C_6$) stehen,
- R' unabhängig voneinander für eine eventuell substituierte Acylradikalgruppe von $C_1$ bis $C_6$ steht, oder für eine eventuell substituierte und/oder ungesättigte Acylidenradikalgruppe von $C_1$ bis $C_6$ steht,
- wobei R und R' vorzugsweise miteinander verbunden sind, um eine heterocyclische Verbindung mit 5 bis 7 Gliedern zu bilden, und vorzugsweise dergestalt gewählt sind, dass aus der Formel (**A**) die Formel (**B**) wird:

(B) 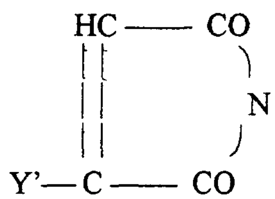

- und dass es vernetzbar ist, nachdem es in die Form eines Films gebracht und dann getrocknet wurde, wobei diese Vernetzung durch Aushärtung(en) erfolgt, die ein Ergebnis
- der Reaktion der Abschlussreaktionsfunktionen verschiedener Polymergerüste miteinander ist,
- und eventuell der Reaktion dieser Abschlussreaktionsfunktionen des Polymers und eines Vernetzungshilfsmittels ist.

2. Polymer nach Anspruch 1, **dadurch gekennzeichnet, dass** die Abschlussreaktionsfunktion aus der Liste der folgenden Funktionen gewählt wird: Maleimid, Nadimid, Acryl, Methacryl, Acrylamid, Vinyl, Styryl, Allyl, Sylyl, Cyanat, Isocyanat, Thiocyanat, Cyanamid, Nitril, Epoxy, Acetylen.

3. Polymer nach Anspruch 1 oder 2, **dadurch gekennzeichnet, dass** das Mol-Zahlenverhältnis der Abschlussreaktionsfunktionen zu den elementaren Polymerisationsfunktionen des Polymergerüsts zwischen 0,004 und 0,5 beträgt, vorzugsweise zwischen 0,004 und 0,4 und noch besser zwischen 0,04 und 0,2.

4. Polymer nach einem der Ansprüche 1 bis 3, **dadurch gekennzeichnet, dass** das Polymergerüst Polymerisationsfunktionen aufweist, die aus mindestens einer der folgenden Funktionen ausgewählt ist:
Urethan, Ester, Amid, Imid, Ether, Kohlenstoff-Kohlenstoff, Sulfid, Silan, Siloxan; wobei die Urethan- und Esterfunktionen besonders bevorzugt werden.

5. Polymer nach einem der Ansprüche 1 bis 4, **dadurch gekennzeichnet, dass** das Chromophor aus den Azobenzol-, Stilben- oder ausgehärteten Stilben-Einheiten gewählt wird.

6. Polymer nach einem der Ansprüche 1 bis 5, **dadurch gekennzeichnet, dass** seine molekulare Masse zwischen 1 000 und 500 000 D beträgt, vorzugsweise zwischen 1000 und 100 000 D und noch besser zwischen 1000 und 50 000 D.

7. Polymer, **dadurch gekennzeichnet, dass** es aus einem vernetzten Polymer besteht, das durch Vernetzung des Polymers nach einem der Ansprüche 1 bis 6 erzielt wird.

**8.** Verfahren zur Herstellung insbesondere des Polymers nach einem der Ansprüche 1 bis 6, **dadurch gekennzeichnet, dass**

- ein Mono-Chromophor vorbereitet wird, das durch eine Abschlussreaktionsfunktion funktionalisiert wird,
- man dieses Chromophor mit einem identischen oder anderen Chromophor reagieren lässt, welches Träger von mindestens zwei Polymerisationsfunktionen ist.

**9.** Verfahren zur Herstellung insbesondere des Polymers nach einem der Ansprüche 1 bis 6, **dadurch gekennzeichnet, dass**

- das Polymergerüst aus Monomeren vorbereitet wird, die aus dem funktionalisierten Chromophor gebildet sind oder nicht,
- an mindestens zwei der Enden des Polymergerüsts mindestens eine Abschlussreaktionsfunktion übertragen wird,
- und eventuell Chromophor mit dem Polymergerüst verbunden wird.

**10.** Material, **dadurch gekennzeichnet**, dass es Polymer gemäß einem der Ansprüche 1 bis 9 enthält.

**11.** Optische Vorrichtung, **dadurch gekennzeichnet, dass** sie aus einem Material nach Anspruch 10 hergestellt ist.

## Claims

**1.** A cross-linkable polymer usable in optics and non-linear optics, which comprises at least one chromophor, characterized

- in that said polymer has on at least two of its ends, at least one reactive end group of a different chemical type from that of the group predominantly used in polymerization and the preparation of a polymer skeleton,
- and in that the reactive end group has the following formula :

**(A)**

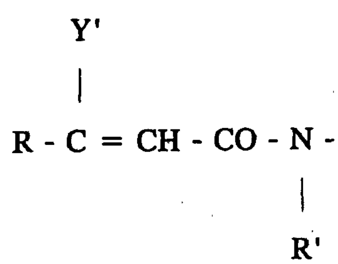

in which :

- Y' is H, $CH_3$ or Cl,
- the radicals R are independently a hydrogen atom or optionally substituted; low-molecular (from $C_1$ to $C_6$) alkyl or alkylidene radicals, and
- R' is independently an optionally substituted $C_1$ to $C_6$ acyl group or an optionally substituted and/or unsaturated $C_1$ to $C_6$ acylidene group, or
- R and R' being:
  - preferably joined together to form a 5- to 7-membered heterocycle group,
  - and more preferably, selected so that formula **(A)** become formula **(B) :**

(B) 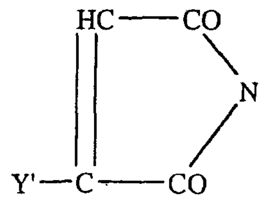

- from the reaction, between them, of the end reactive groups of different polymer skeletons,
- and, eventually, from the reaction between these end reactive groups of the polymer and a crosslinking auxiliary.

**2.** Polymer according to claim 1 characterized in that the reactive end group is selected from the following list of groups: maleimide, nadimide, acrylic, methacrylic, acrylamide, vinyl, styryl, allyl, silyl, cyanate, isocyanate, thiocyanate, cyanamide, nitrile, epoxy, acetylene.

**3.** Polymer according to claim 1or 2 characterized in that the numerical molar ratio: reactive end groups/elementary polymerization groups of the polymer skeleton is between 0.004 and 0.5, preferably between 0,004 and 0,4 and, still more preferably between 0,04 and 0,2.

**4.** Polymer according to any one of claims 1 to 3 characterized in that the polymer skeleton comprises polymerization groups selected from at least one of the following groups: urethane, ester, amide, imide, ether, carbon-carbon, sulfide, silane and siloxane, urethane and ester groups being particularly preferred.

**5.** Polymer according to any one of claims 1 to 4 characterized in that the chromophore is selected from azobenzene, stilbene and bridged stilbene units.

**6.** Polymer according to any one of claims 1 to 5 characterized in that its molecular weight is between 1000 and 500,000 D, preferably between 1000 and 100,000 D and still more preferably, between 1000 and 50,000 D.

**7.** Polymer according to any one of claims 1 to 6 characterized in that it is constituted by a crosslinked polymer obtained by crosslinking of the polymer according any one of the claims 1 to 6.

**8.** A method of preparing especially the polymer according to any one of claims 1 to 6,
characterized in that:

- a chromophore monofunctionalized by a reactive end group is prepared,
- and this chromophore is reacted with an identical or different chromophore carrying at least two polymerization groups.

**9.** A method of preparing especially the polymer according to any one of claims 1 to 6,
characterized in that:

- the polymer skeleton is prepared from monomers which may or may not consist of a functionalized chromophore,
- at least one reactive end group is grafted onto at least two of the ends of the polymer skeleton, and
- a chromophore is optionally attached to the polymer skeleton.

**10.** Material, characterized in that it contains the polymer according to any one of claims 1 to 9.

**11.** An optical device, characterized in that it is made of a material according to claim 10.